# EUROPEAN PATENT APPLICATION

(11) **EP 3 208 989 A1**
(43) Date of publication of application: **23.08.2017**
(21) Application number: 15856581.2
(22) Date of filing: 12.03.2015
(51) Int. Cl.: H04L 29/06, H04L 9/08

(54) **SECURE SHELL (SSH2) PROTOCOL DATA COLLECTION METHOD AND DEVICE**

(30) Priority: 05.11.2014 CN 201410637319
(71) Applicant: Institute of Acoustics, Chinese Academy of Sciences, Haidian District Beijing 100190 (CN); Beijing Intellix Technologies Co. Ltd., Beijing 100190 (CN)
(72) Inventor: SONG, Lei, Beijing 100190 (CN); YE, Xiaozhou, Beijing 100190 (CN); ZHENG, Yanwei, Beijing 100190 (CN); DONG, Haitao, Beijing 100190 (CN); WU, Jinghong, Beijing 100190 (CN); FAN, Hao, Beijing 100190 (CN)
(74) Representative: Hanna Moore + Curley
(86) International application number: PCT/CN2015/074081
(87) International publication number: WO 2016/070538

(57) **Abstract**

The embodiments of the present invention relate to a secure shell (SSH2) protocol data collection method and device; and an SSH2 connection is established between a client device and a service end device. The method comprises: acquiring an SSH2 data packet transmitted between a client device and a service end device; recombining and arranging the SSH2 data packet into an ordered network data packet; successively detecting a type of the SSH2 data packet; if the type of the SSH2 data packet indicates that the SSH2 data packet is a data packet in an SSH2 protocol handshaking phase, then recording original handshaking information, and replacing same with new handshaking information, and when the handshaking information is sufficient, deriving a transmission key of an SSH2 key after negotiation; and if the type of the SSH2 data packet indicates that the SSH2 data packet is a data packet in an SSH2 protocol ciphertext transmission phase, then using the derived transmission key to convert ciphertext data into plaintext data, and taking the plaintext data as a collection result to be output. It can be seen from the above that in the embodiments of the present invention, it is not easy for a data collector to receive a targeted attack, thereby improving the collection efficiency and having a good user experience.

## Description

### TECHNICAL FIELD

The present invention relates to the technical field of network security communication, and in particular to a method and device for collecting secure shell SSH2 protocol data.

### BACKGROUND OF THE INVENTION

With an increasing emphasis on network security, the Secure Shell (SSH) protocol is widely used little by little. The SSH protocol is formulated by the Internet Engineering Task Force (IETF), and which is a security protocol established on the basis of an application layer and transport layer, and also a reliable protocol for providing security dedicated for a remote login session and other network service currently. At present the SSH protocol has gradually taken the place of protocols such as telnet, and becomes a preferred protocol for remote login and transport proxy. The SSH2 protocol is a 2.x version of the SSH protocol, defined and described in details in RFC 4250-RFC 4254 criterions. As the SSH2 protocol has a characteristic of an encrypted transmission, a data collector in a network cannot collect and analyze directly the SSH2 protocol data in the network, therefore there needs a particular collecting method to convert the collected SSH2 protocol data from ciphertext data into plaintext data.

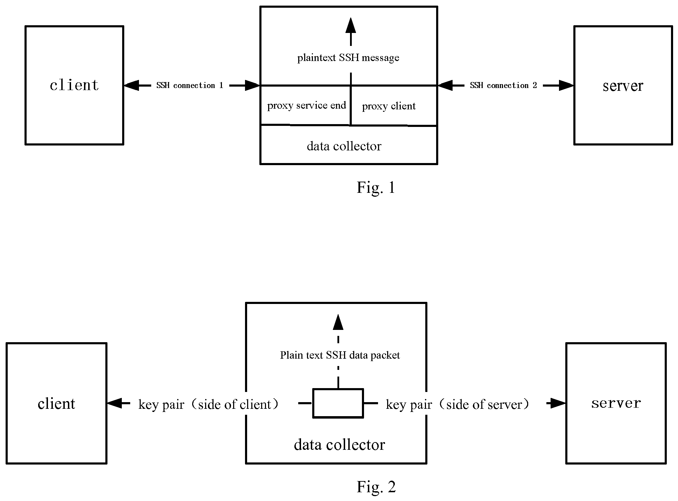

Fig. 1 is a schematic diagram of a method for collecting SSH2 protocol data in the prior art. Referring to Fig. 1, a client apparatus cannot establish directly a connection with a service end apparatus, but establish indirectly a connection through a data collector. The data collector exists explicitly in the network, has its own IP address, and integrates a SSH proxy service end and a SSH proxy client. When the data collector collects the SSH2 protocol data, a two-time login method is employed that is first to initiate by the client apparatus a SSH connection and login to the service end apparatus, then to initiate by the data collector a SSH connection and login to the service end apparatus. The data connector needs to maintain two SSH connections simultaneously, decrypts according to the obtained complete SSH message so as to convert the collected SSH2 protocol data from the ciphertext data into the plaintext data.

It can be seen from the above, the method for collecting SSH2 protocol data in the prior art has the following defects: (1) the data collector exists explicitly in the network, has its own IP address, and is easy to expose a network location of the data collector, thereby suffering a targeted attack; (2) the data collector can perform operations such as decryption, etc. until a complete SSH message is obtained, when there is a larger SSH message, worse condition of network or larger number of concurrent users, a significant delay of collection will be caused, which will reduce a collection efficiency and bring worse operating experience to the users of the SSH.

### SUMMARY OF THE INVENTION

Embodiments of the present invention provide a method and device for collecting SSH2 protocol data that can make a data collector not easy for suffering a targeted attack, improve the collection efficiency and bring good user experience.

In an aspect, a method for collecting SSH2 protocol data is provided, a SSH2 connection is established between a client apparatus and a service end apparatus, the method comprises:
acquiring SSH2 data packets transmitted between the client apparatus and the service end apparatus;
reassembling and arranging the SSH2 data packets into ordered network data packets;
detecting successively types of the SSH2 data packets;
recording original handshake information and replacing with new handshake information if the types of the SSH2 data packets indicate that the SSH2 data packets are data packets in the SSH2 protocol handshake phase, and deriving a transmission key after SSH2 key negotiation when the handshake information is sufficient; and
converting ciphertext data carried by data packets in the SSH2 protocol ciphertext transmission phase into plaintext data with the derived transmission key if the types of the SSH2 data packets indicate that the SSH2 data packets are the data packets in the SSH2 protocol ciphertext transmission phase, and outputting the plaintext data as a collection achievement.

In another aspect, a device for collecting SSH2 protocol data is provided, a SSH2 connection is established between a client apparatus and a service end apparatus, the device comprises:
an acquiring unit used for acquiring SSH2 data packets transmitted between the client apparatus and the service end apparatus;
a reassembling unit used for reassembling and arranging the SSH2 data packets acquired by the acquiring unit into ordered network data packets;
a detecting unit used for detecting successively types of the data packets after SSH2 reassembled by the reassembling unit;
a first processing unit used for recording original handshake information and replacing with new handshake information if the types of the SSH2 data packets detected by the detecting unit indicate that the SSH2 data packets are data packets in the SSH2 protocol handshake phase, and deriving a transmission key after SSH2 key negotiation when the handshake information is sufficient; and
a second processing unit used for converting ciphertext data carried by data packets in the SSH2 protocol ciphertext transmission phase into plaintext data with the derived transmission key if the types of the SSH2 data packets detected by the detecting unit indicate that the SSH2 data packets are the data packets in the SSH2 protocol ciphertext transmission phase, and outputting the plaintext data as a collection achievement.

In the method for collecting SSH2 protocol data provided by the embodiment of the present invention, a client apparatus takes directly an address of a service end apparatus as a target address to establish a SSH2 connection without the two-time login through a data collector and without assigning a network address to the data collector implementing the method, wherein the data collector may specifically be a network switching apparatus, for example a switch or router disposed between the client apparatus and the service end apparatus, which has no an IP address itself. The data collector in the prior art is equivalent to a proxy server, and requires the client apparatus to login in it actively, whereas the data collector in the present invention can be transparently and flexibly deployed in a network and is not easy for suffering a targeted attack. Moreover, the method for collecting SSH2 protocol data of the present invention takes a SSH2 data packet not a complete SSH2 message as a processing unit, thus realizing a little processing delay, strong concurrent serving capability, and improving collection efficiency and good user experience.

### BRIEF DESCRIPTION OF THE DRAWINGS

Fig. 1 is a schematic diagram of a method for collecting SSH2 protocol data in the prior art;
Fig. 2 is a schematic diagram of a method for collecting SSH2 protocol data in an embodiment of the present invention;
Fig. 3 is a flow diagram of a method for collecting SSH2 protocol data in an embodiment of the present invention;
Fig. 4 is a schematic diagram of a method for collecting SSH2 protocol data in another embodiment of the present invention;
Fig. 5 is an interaction diagram of data packets when the method for collecting SSH2 protocol data of an embodiment of the present invention is employed to process the data packets; and
Fig. 6 is a device-structural diagram of a device for collecting SSH2 protocol data in an embodiment of the present invention.

### DETAILED DESCRIPTION OF THE INVENTION

Below technical solutions of the present invention will be described in details through the accompanying drawings and embodiments.

In order to make the objectives, technical solutions and advantages of the embodiments of the present invention more clear, the technical solutions in the embodiments of the present invention are described clearly and completely in conjunction with the accompanying drawings in the embodiments of the present inventions below. It will be apparent that the described embodiments are some but not all of the embodiments of the present invention. All other embodiments obtained by those skilled in the art without any creative efforts belong to the scope protected by the present invention.

In order to facilitate the understanding of the embodiments of the present invention, specific embodiments will be further explained below in conjunction with the drawings, and not be a limiting of the embodiments of the present invention.

Fig. 2 is a schematic diagram of a method for collecting SSH2 protocol data in an embodiment of the present invention. Referring to Fig. 2, compared with the method for collecting SSH2 protocol data in the prior art as shown in Fig. 1, the traditional method employs a way of SSH two-time login. A collector exists explicitly in the network, has its own IP address, integrates a SSH proxy service end and a proxy client, establishes two IP/TCP/SSH connections respectively with the client and service end, and takes a SSH message as a processing unit when collecting data. Whereas in the method of the present invention, the collector which does not establish a connection, need not have its own IP address, is publically connected in series between the client and service end, the collector grasps a pair of keys for SSH transmission of the client and the service end on the basis that there is a connection therebetween, and collects data with a network data packet as a processing unit.

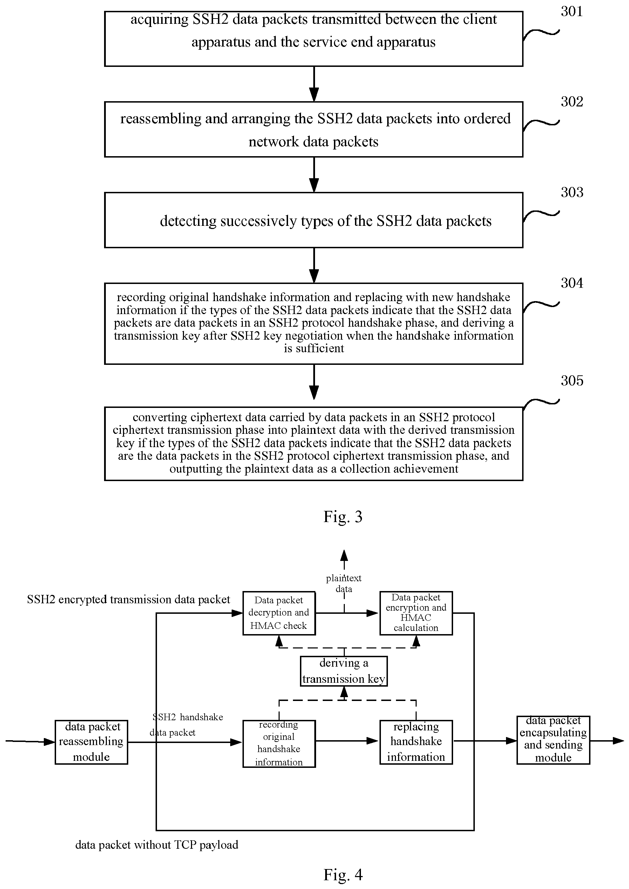

Fig. 3 is a flow diagram of a method for collecting SSH2 protocol data in an embodiment of the present invention, wherein a SSH2 connection is established between a client apparatus and a service end apparatus. Referring to Fig. 3, the method comprises:
step 301, acquiring SSH2 data packets transmitted between the client apparatus and the service end apparatus.
Step 302, reassembling and arranging the SSH2 data packets into ordered network data packets.
Step 303, detecting successively types of the SSH2 data packets.
Step 304, recording original handshake information and replacing with new handshake information if the types of the SSH2 data packets indicate that the SSH2 data packets are data packets in the SSH2 protocol handshake phase, and deriving a transmission key after SSH2 key negotiation when the handshake information is sufficient.
Step 305, converting ciphertext data carried by data packets in the SSH2 protocol ciphertext transmission phase into plaintext data with the derived transmission key if the types of the SSH2 data packets indicate that the SSH2 data packets are data packets in the SSH2 protocol ciphertext transmission phase, and outputting the plaintext data as a collection achievement.

In an embodiment of the present invention, the method may further comprise a processing step of data packet encapsulation: for the data packets in the SSH2 protocol handshake phase with the replaced new handshake information, re-determining transmission control protocol TCP headers and internet protocol IP headers, and re-preforming the data packet encapsulation on the data packets in the SSH2 protocol handshake phase with the replaced new handshake information followed by sending to a receiving party apparatus that is the client apparatus or the service end apparatus; and encrypting the plaintext data into the ciphertext data with the derived transmission key and re-determining the TCP headers and IP headers for the data packets in the SSH2 protocol ciphertext transmission phase, and re-performing the data packet encapsulation on the ciphertext data followed by sending to the receiving party apparatus.

In addition, since any processing on data packets without a TCP payload may be not taken, the method may further comprise:
sending data packets without a TCP payload to the receiving party apparatus, if the types of the SSH2 data packets indicate that the SSH2 data packets are the data packets without the TCP payload.

Among the above, the data packets without the TCP payload may specifically be acknowledge number (ACK) data packets in TCP headers.

In the step 302 of an embodiment of the present invention, the reassembling and arranging the SSH2 data packets into ordered network data packets may specifically comprise: adding the data packets in two directions of a SSH2 connection into different queues, and arranging the SSH2 data packets in order by sequence numbers SEQ of TCP.

The SSH2 protocol handshake phase includes a version negotiation subphase, an algorithm negotiation subphase and a key negotiation subphase. Therefore, in the step 304, recording original handshake information and replacing with new handshake information if the types of the SSH2 data packets indicate that the SSH2 data packets are data packets in the SSH2 protocol handshake phase, and deriving a transmission key after SSH2 key negotiation when the handshake information is sufficient, may specifically comprise:
recording original version negotiation information and replacing with new version negotiation information, for the data packets in the version negotiation subphase;
recording original algorithm negotiation information and replacing with new algorithm negotiation information for the data packets in the algorithm negotiation subphase, and deriving respectively an algorithm negotiation result at a side of the client apparatus and the algorithm negotiation result at a side of the service end apparatus after the algorithm negotiation information of the client apparatus and the service end apparatus is recorded;
recording original key negotiation information and replacing with new key negotiation information for the data packets in the key negotiation subphase, and deriving respectively a SSH2 transmission key at the side of the client apparatus and a SSH2 transmission key at the side of the service end apparatus after a new key-enabled message of the SSH2 protocol is received.

In the step 305 of an embodiment of the present invention, the converting ciphertext data carried by data packets in the SSH2 protocol ciphertext transmission phase into plaintext data with the derived transmission key if the types of the SSH2 data packets indicate that the SSH2 data packets are data packets in the SSH2 protocol ciphertext transmission phase, and outputting the plaintext data as a collection achievement, may specifically comprise:
converting the ciphertext data carried by the data packets in the SSH2 protocol ciphertext transmission phase into plaintext data with the transmission key of the side of input, and checking the integrity of the plaintext data through a value of hash message authentication code HMAC;
outputting the plaintext data with a complete check result as the collection achievement.

In an embodiment of the present invention, encrypting the plaintext data into ciphertext data with the derived transmission key for the data packets in the SSH2 protocol ciphertext transmission phase, may specifically comprise: encrypting the checked plaintext data into ciphertext data with the transmission key of the side of output, and recalculating the value of HMAC of the ciphertext data and checking the integrity of the ciphertext data;
Re-determining the TCP headers and IP headers and re-performing the data packet encapsulation on the ciphertext data followed by sending to the receiving party apparatus, may specifically comprise: re-determining the TCP headers and IP headers for the ciphertext data with the complete check result, and re-performing the data packet encapsulation on the ciphertext data followed by sending to the receiving party apparatus.

In addition, re-determining the TCP headers and IP headers may specifically comprise: judging whether lengths of the data packets are changed; re-determining total lengths of the IP headers, header checksum fields of the IP headers, as well as sequence number SEQs, acknowledge number ACKs and checksum fields in the TCP headers, if it is judged that the lengths of the data packets are changed; re-determining the SEQs, ACKs and checksum fields in the TCP headers if it is judged that the lengths of the data packets are not changed.

It can be seen from the above processing, in the method for collecting SSH2 protocol data provided by an embodiment of the present invention, the client apparatus takes directly an address of the service end apparatus as a target address to establish an SSH2 connection without the two-time login through the data collector and without assigning a network address to the data collector implementing the method, wherein the data collector may specifically be a network switching apparatus, for example a switch or router disposed between the client apparatus and the service end apparatus, which has no IP address itself. The data collector in the prior art is equivalent to a proxy server, and requires the client apparatus to login in it actively, whereas the data collector in the present invention can be transparently and flexibly deployed in the network and is not easy for suffering a targeted attack. Moreover, the method for collecting SSH2 protocol data of the present invention takes a SSH2 data packet not a complete SSH2 message as a processing unit, thus realizing a little processing delay, strong concurrent serving capability, improving collection efficiency and good user experience.

Below the method for collecting SSH2 protocol data is described in details through a specific embodiment.

Fig. 4 is a schematic diagram of a method for collecting SSH2 protocol data in another embodiment of the present invention. Referring to Fig. 4, the method comprises:
step 1, adding data packets in two directions of a SSH2 connection into different queues by a data packet reassembling module, and arranging them in order by SEQ numbers of TCP to form ordered network data packets followed by being successively middle processed.

Among the above, since the data packets transmitted on the network might be out of order, the data packet reassembling module restores them into an ordered arrangement, which refrain the data packets with latter sequence numbers from being middle processed, and from causing error data during middle processed.

Step 2, performing middle processing according to different types of data packets.

As for data packets in an SSH2 protocol handshake phase: if they are the data packets in a version negotiation subphase, original version negotiation information is recorded, and replaced with new version negotiation information; if they are the data packets in an algorithm negotiation subphase, original algorithm negotiation information is recorded, and replaced with new algorithm negotiation information, after the algorithm negotiation information of the client and service end was recorded, algorithm negotiation results of a side of the client and the side of the service end are derived respectively; if they are the data packets in a key negotiation subphase, original key negotiation information is recorded, and replaced with new key negotiation information, after a new key-enabled message of the SSH2 protocol is received, the SSH2 transmission keys of the side of client and the side of the service end are derived respectively.

As for the data packets in the SSH2 protocol ciphertext transmission phase, the ciphertext data in the data packets is first decrypted into the plaintext data with the transmission key of the side of input, a value of the Hash-based Message Authentication Code (HMAC) is calculated to check the message, then the checked plaintext SSH2 data packets are output as collection achievements, finally the checked plaintext SSH2 messages are encrypted into ciphertext with the transmission key of the side of output, and values of HMAC are recalculated.

Among the above, the values of HMAC may be used for verifying the integrity of data of data packets.

The middle processing may be not performed on the data packets without the TCP payload.

Step 3, sending the data packets after IP headers and TCP headers thereof being recalculated by a data packet encapsulating and sending module.

Among the above, if the lengths of the data packets are changed in the course of middle processing, the total lengths and header checksum fields of the IP headers, as well as SEQs, ACKs and checksum fields in the TCP headers are recalculated; if the lengths of the data packets are not changed in the course of middle processing, SEQs, ACKs and checksum fields in the TCP headers are recalculated.

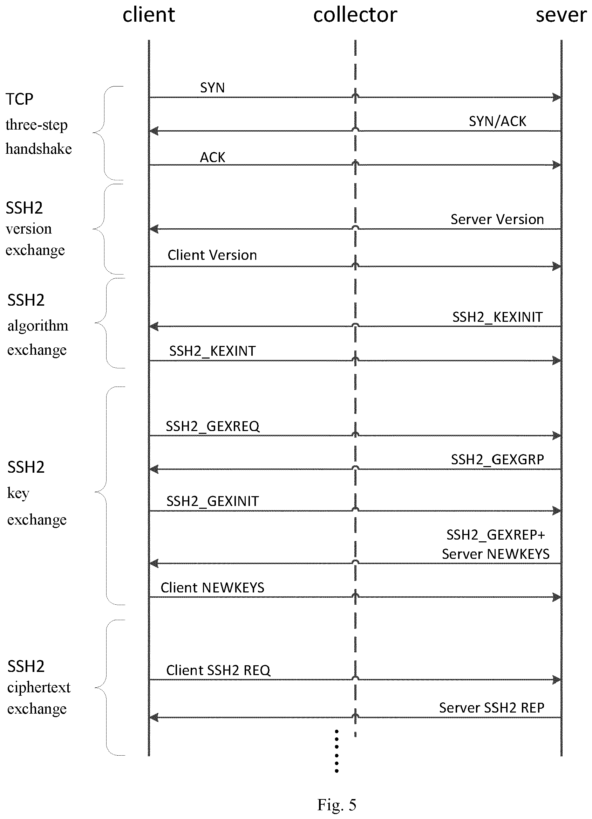

Fig. 5 is an interaction diagram of data packets when the method for collecting SSH2 protocol data of an embodiment of the present invention is employed to process the data packets. Below the method of the present invention is explained in details in reference to Fig. 5.

In the following illustration, incoming network data packets are arranged in order through the data packet reassembling module, and the TCP/IP headers of the data packets are modified universally via the data packet encapsulating and sending module before the data packets are forwarded. When the headers are modified, if the data packets are changed in lengths in the course of middle processing, the total lengths and header checksum fields of the IP headers, as well as the SEQs, ACKs and checksum fields of the TCP headers are recalculated; if the data packets are not changed in lengths in the course of middle processing, the SEQs, ACKs and checksum fields of the TCP headers are recalculated.
(1) A client initiates a TCP connection request, and performs a three-step handshake interaction with a service end.
(2) The service end sends its own version to the client, a collector records a data packet containing version information, and replaces with the data packet containing new version information; similarly, the client sends its own version to the service end, the collector records the data packet, and replaces with the data packet containing new version information.
(3) The service end sends algorithm negotiation information to the client, the collector records the data packet containing the algorithm negotiation information, and replaces with the algorithm negotiation information consisted by an algorithm which can be processed by the collector; similarly, the client sends the algorithm negotiation information to the service end, the collector records the data packet containing the algorithm negotiation information, and replaces with the algorithm negotiation information consisted by an algorithm which can be processed by the collector. Upon the algorithm negotiation information of the client and the service end was recorded, algorithm negotiation results of the side of client and the side of the service end are derived respectively.
(4) A DH key negotiation is performed between the client and the service end, the collector records DH key negotiation information therein, replaces the key negotiation information such as a DH key exchange parameter, service end public key, digital signature and the like with new key negotiation information. After the data packet containing a new key-enabled notification is received, the SSH2 transmission keys of the side of the client and the side of the service end are derived respectively.

The middle processing process is specifically:
In a version negotiation phase, the collector records version messages sent by the both ends, replaces them with its own version messages followed by being forwarded. This process may change the length of the data packet.

In an algorithm negotiation phase, the collector records algorithm negotiation messages sent by the both ends, and replaces it with the algorithm negotiation messages constructed by the algorithm supported by the collector. The process may change the length of the data packet.

In a key negotiation phase, for a SSH2_GEXREQ message in Fig. 5, the collector records and forwards information parameters. This process will not change the lengths of the data packets. as for the SSH2_GEXGRP message in Fig. 5, the collector records public numbers P and G of DH key exchange parameters, and then forwards the same. This process will not change the lengths of the data packets. As for the SSH2_GEXINIT message in Fig. 5, the collector generates two pairs of private secret values and public secret values for DH key exchange, the two pairs of secret values are respectively for the client and the service end. The collector replaces the public secret value of the client with the public secret value of its corresponding own client. This process will change the lengths of the data packets. as for the SSH2_GEXREP message, the collector replaces the public secret value of the service end with the public secret value of its own corresponding service end, replaces an encrypted public key of the service end with an encrypted public key of the collector, and replaces a digital signature of the service end with the digital signature of the collector, this process will change the lengths of the data packets. After the key negotiation phase ends, the collector calculates respectively the key exchange results of the side of the client and the side of the service end according to a calculation rule of DH key exchange.

This calculation rule is standard, and may employ an existing cryptographic algorithm.

The basic principle of the DH key exchange algorithm is:
(1) the client selects randomly a private secret value x, 1<x<p-1, calculates e=g^x mod p, and sends the calculated e to the service end, wherein p is a large prime number, g is a primitive root of p. p and g are a pair of parameters common to both parties.
(2) the server also generates randomly a private secret value y, 1<y<p-1, calculates f=g^y mod p, and also sends the calculated f to the client.
(3) the server receives e sent from the client, and calculates a key negotiation result in accordance with to an equation below:
   K = (e) ^y mod p
(4) the client receives f sent from the server end, and calculates the key negotiation result in accordance with an equation below:
   K = (f) ^x mod p
   In an embodiment of the present invention, the collector achieves a purpose of key exchange with the client and the service end respectively by replacing parameters for DH key exchange in the data packets, obtaining the key negotiation results of the side of client and the side of service end.
(5) When the ciphertext transmission is performed between the client and service end, the collector first decrypts a SSH2 message in the data packet into plaintext with a transmission key of the side of input, calculates the value of HMAC to check the message, then outputs the plaintext SSH2 data packets as collection achievements, finally encrypts the plaintext SSH2 message into ciphertext with the transmission key of the side of output, and recalculates the value of HMAC.
   Among the above, since the client and service end have different keys, the service end cannot decrypt the data encrypted by the client with its key, and needs an intermediate data collector to decrypt with client key first and then encrypt with service end key, at this time the service end can decrypt out plaintext, thus here the data collector decrypts with a key of the side of input, and then encrypts with the key of the side of output.
(6) In the above process, there also exists data packets without a TCP payload, such as ACK packet, to this, the collector does not change the data packets in this step of middle processing.

Correspondingly, the present invention further provides a device for collecting SSH2 protocol data.

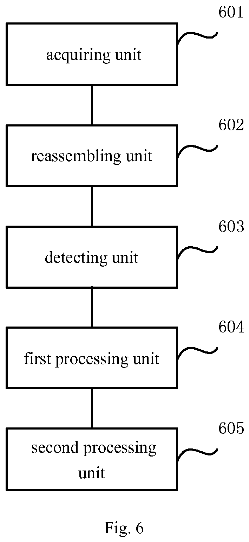

Fig. 6 is a device-structural diagram of a device for collecting SSH2 protocol data in an embodiment of the present invention, a SSH2 connection is established between a client apparatus and a service end apparatus, the device comprises:
an acquiring unit 601 used for acquiring SSH2 data packets transmitted between the client apparatus and the service end apparatus;
a reassembling unit 602 used for reassembling and arranging the SSH2 data packets obtained by the acquiring unit 601 into ordered network data packets;
a detecting unit 603 used for detecting successively types of the data packets after SSH2 reassembled by the reassembling unit 602;
a first processing unit 604 used for recording original handshake information and replacing with new handshake information when the types of the SSH2 data packets detected by the detecting unit 603 indicate that the SSH2 data packets are data packets in the SSH2 protocol handshake phase, and deriving a transmission key after SSH2 key negotiation when the handshake information is sufficient;
a second processing unit 605 used for converting ciphertext data carried by data packets in the SSH2 protocol ciphertext transmission phase into plaintext data with the derived transmission key when the types of the SSH2 data packets detected by the detecting unit 603 indicate that the SSH2 data packets are the data packets in the SSH2 protocol ciphertext transmission phase, and outputting the plaintext data as collection achievements.

Preferably, the device further comprises:
a data packet encapsulating and sending unit used for re-determining transmission control protocol TCP headers and internet protocol IP headers for the data packets in the SSH2 protocol handshake phase with the new handshake information replaced by the first processing unit, and re-performing data packet encapsulation on the data packets in the SSH2 protocol handshake phase with the replaced new handshake information followed by sending to a receiving party apparatus that is the client apparatus or the service end apparatus;
an encrypting unit used for encrypting the plaintext data into ciphertext data with the derived transmission key for the data packet in the SSH2 protocol ciphertext transmission phase after processed by the second processing unit;
the data encapsulating and sending unit is further used for re-determining the TCP headers and IP headers for the ciphertext data encrypted by the encrypting unit, and re-performing the data packet encapsulation on the ciphertext data followed by sending to the receiving party apparatus.

It will be appreciated by those skilled in the art that, units and algorithm steps of various examples described in conjunction with embodiments disclosed herein can be implemented in electronic hardware, computer software or a combination of both. To illustrate clearly the interchangeability of hardware and software, the composition and steps of various examples have been generally described in accordance with functions in the above-described explanations. Whether these functions are implemented in hardware or software on earth depends on a specific application and design constraint condition of a technical solution. Professionals may utilize different methods for each specific application to implement the described functions, but this implementation shall not be considered as being beyond the scope of the present invention.

Steps of methods or algorithms described in conjunction with embodiments disclosed herein may be implemented in hardware, software modules executable by a processor, or a combination of the both. The software modules may be built in a Random Access Memory (RAM), memory, Read-Only Memory (ROM), electrically programmable ROM, electrically erasable programmable ROM, register, hard disk, movable disk, CD-ROM or any other form of storage medium well-known in the art.

Finally, it should be explained that the aforementioned embodiments are merely used for illustrating, rather than limiting the technical solutions of the present invention. Although the present invention has been described in detail with reference to the embodiments, those skilled in the art will understand that modifications or equivalent substitutions can be made to the technical solutions of the present invention without departing from the scope and spirit of the technical solutions of the present invention, and thereby should all be encompassed within the scope of the claims of the present invention.

## Claims

1. A method for collecting secure shell SSH2 protocol data, **characterized in that**, a SSH2 connection is established between a client apparatus and a service end apparatus, the method comprises:
acquiring SSH2 data packets transmitted between the client apparatus and the service end apparatus;
reassembling and arranging the SSH2 data packets into ordered network data packets;
detecting successively types of the SSH2 data packets;
recording original handshake information and replacing with new handshake information if the types of the SSH2 data packets indicate that the SSH2 data packets are data packets in the SSH2 protocol handshake phase, and deriving a transmission key after SSH2 key negotiation when the handshake information is sufficient; and
converting ciphertext data carried by data packets in an SSH2 protocol ciphertext transmission phase into plaintext data with the derived transmission key if the types of the SSH2 data packets indicate that the SSH2 data packets are the data packets in the SSH2 protocol ciphertext transmission phase, and outputting the plaintext data as a collection achievement.

2. The method of claim 1, **characterized in that**, the method further comprises:
re-determining transmission control protocol TCP headers and internet protocol IP headers for the data packets in the SSH2 protocol handshake phase with the replaced new handshake information, and re-preforming data packet encapsulation on the data packets in the SSH2 protocol handshake phase with the replaced new handshake information followed by sending to a receiving party apparatus which is the client apparatus or the service end apparatus;
encrypting the plaintext data into ciphertext data with the derived transmission key for the data packets in the SSH2 protocol ciphertext transmission phase, re-determining the TCP headers and IP headers, and re-performing the data packet encapsulation on the ciphertext data followed by sending to the receiving party apparatus.

3. The method of claim 2, **characterized in that**, the method further comprises:
sending data packets without a TCP payload to the receiving party apparatus, if the types of the SSH2 data packets indicate that the SSH2 data packets are the data packets without a TCP payload.

4. The method of claim 3, **characterized in that**, the reassembling and arranging the SSH2 data packets into the ordered network data packets specifically comprises:
adding the data packets in two direction of the SSH2 connection into different queues, and arranging the SSH2 data packets by a sequence number SEQ of TCP in order.

5. The method of claim 4, **characterized in that**, the SSH2 protocol handshake phase comprises a version negotiation subphase, an algorithm negotiation subphase and a key negotiation subphase, recording original handshake information and replacing with new handshake information if the types of the SSH2 data packets indicate that the SSH2 data packets are data packets in the SSH2 protocol handshake phase, and deriving a transmission key after SSH2 key negotiation when the handshake information is sufficient, specifically comprises:
recording original version negotiation information and replacing with new version negotiation information, for the data packets in the version negotiation subphase;
recording original algorithm negotiation information and replacing with new algorithm negotiation information for the data packets in the algorithm negotiation subphase, and deriving respectively an algorithm negotiation result of a side of the client apparatus and an algorithm negotiation result of the side of the service end apparatus upon the algorithm negotiation information of the client apparatus and the service end apparatus was recorded;
recording original key negotiation information and replacing with new key negotiation information for the data packets in the key negotiation subphase, and deriving respectively an SSH2 transmission key of the side of the client apparatus and an SSH2 transmission key of the side of the service end apparatus upon a new key-enabled message of the SSH2 protocol is received.

6. The method of claim 5, **characterized in that**, converting ciphertext data carried by data packets in an SSH2 protocol ciphertext transmission phase into plaintext data with the derived transmission key if the types of the SSH2 datapackets indicate that the SSH2 data packets are the data packets in the SSH2 protocol ciphertext transmission phase, and outputting the plaintext data as a collection achievement, specifically comprises:
converting the ciphertext data carried by the data packets in the SSH2 protocol ciphertext transmission phase into plaintext data with the transmission key of a side of input, and checking the integrity of the plaintext data through a value of a hash message authentication code HMAC;
outputting the plaintext data with a complete check result as the collection achievement.

7. The method of claim 6, **characterized in that**, encrypting the plaintext data into ciphertext data with the derived transmission key for the data packets in the SSH2 protocol ciphertext transmission phase, specifically comprises:
encrypting the checked plaintext data into the ciphertext data with the transmission key of the side of output, recalculating the value of HMAC of the ciphertext data, and checking the integrity of the ciphertext data;
re-determining the TCP headers and IP headers, and re-performing the data packet encapsulation on the ciphertext data followed by sending to the receiving party apparatus, specifically comprises:
re-determining the TCP headers and IP headers for the ciphertext data with a complete check result, and re-performing the data packet encapsulation on the ciphertext data followed by sending to the receiving party apparatus.

8. The method of any one of claims 2-7, **characterized in that**, re-determining the TCP headers and IP headers, specifically comprises:
judging whether lengths of the data packets are changed;
re-determining total lengths of the IP headers, header checksum fields of the IP headers as well as sequence number SEQs, acknowledge number ACKs and checksum fields in the TCP headers, if it is judged that the lengths of the data packets are changed;
re-determining the SEQs, ACKs and checksum fields in the TCP headers, if it is judged that the lengths of the data packets are not changed.

9. A device for collecting secure shell SSH2 protocol data, **characterized in that**, a SSH2 connection is established between a client apparatus and a service end apparatus, the device comprises:
an acquiring unit used for acquiring SSH2 data packets transmitted between the client apparatus and the service end apparatus;
a reassembling unit used for reassembling and arranging the SSH2 data packets acquired by the acquiring unit into ordered network data packets;
a detecting unit used for detecting successively types of the data packets after SSH2 reassembled by the reassembling unit;
a first processing unit used for recording original handshake information and replacing with new handshake information if the types of the SSH2 data packets detected by the detecting unit indicate that the SSH2 data packets are data packets in the SSH2 protocol handshake phase, and deriving a transmission key after SSH2 key negotiation when the handshake information is sufficient; and
a second processing unit used for converting ciphertext data carried by data packets in the SSH2 protocol ciphertext transmission phase into plaintext data with the derived transmission key if the types of the SSH2 data packets detected by the detecting unit indicate that the SSH2 data packets are the data packets in the SSH2 protocol ciphertext transmission phase, and outputting the plaintext data as a collection achievement.

10. The device of claim 9, **characterized in that**, the device further comprises:
a data packet encapsulating and sending unit used for re-determining transmission control protocol TCP headers and internet protocol IP headers for the data packets in the SSH2 protocol handshake phase with the replaced new handshake information by the first processing unit, and re-preforming data packet encapsulation on the data packets in the SSH2 protocol handshake phase with the replaced new handshake information followed by sending to a receiving party apparatus which is the client apparatus or the service end apparatus;
an encrypting unit used for encrypting the plaintext data into ciphertext data with the derived transmission key for the data packets in the SSH2 protocol ciphertext transmission phase after processed by the second processing unit; and
the data packet encapsulating and sending unit is further used for re-determining the TCP headers and IP headers for the ciphertext data encrypted by the encrypting unit, and re-performing the data packet encapsulation on the ciphertext data followed by sending to the receiving party apparatus.
